# EUROPEAN PATENT APPLICATION

(11) **EP 4 318 639 A1**
(43) Date of publication of application: **07.02.2024**
(21) Application number: 21935198.8
(22) Date of filing: 17.12.2021
(51) Int. Cl.: H01M 4/131, H01M 4/525, H01M 10/052, H01M 10/0585, H01M 50/434, H01M 50/46

(54) **LITHIUM SECONDARY BATTERY**

(30) Priority: 30.03.2021 JP 2021058569
(71) Applicant: NGK Insulators, Ltd., Nagoya city, Aichi 467-8530 (JP)
(72) Inventor: MIZUKAMI, Shunsuke, Nagoya-city, Aichi 467-8530 (JP); YURA, Yukinobu, Nagoya-city, Aichi 467-8530 (JP); SHIMAOKA, Ken, Nagoya-city, Aichi 467-8530 (JP); KATO, Takumi, Nagoya-city, Aichi 467-8530 (JP); TANAKA, Yuki, Nagoya-city, Aichi 467-8530 (JP); TAKAMATSU, Aiko, Nagoya-city, Aichi 467-8530 (JP); OISHI, Kengo, Nagoya-city, Aichi 467-8530 (JP)
(74) Representative: Müller-Boré & Partner Patentanwälte PartG mbB
(86) International application number: PCT/JP2021/046837
(87) International publication number: WO 2022/209049

(57) **Abstract**

Provided is a lithium secondary battery with excellent durability that maintains discharge capacity even in the case where charging and discharging are repeated at high speed. The lithium secondary battery includes a positive electrode composed of a sintered body containing lithium cobaltate, a negative electrode, and a separator composed of a sintered body containing magnesia interposed between the positive electrode and the negative electrode. The lithium secondary battery further includes an intermediate layer between the positive electrode and the separator, the intermediate layer containing an oxide containing Co and Mg.

## Description

### Technical Field

The present disclosure relates to a lithium secondary battery. The present application claims priority based on Japanese Patent Application No. 2021-58569 filed on March 30, 2021, the entire contents of which are incorporated herein by reference.

### Background Art

A lithium secondary battery that includes a positive electrode layer composed of a sintered body of a lithium complex oxide, a negative electrode layer composed of a titanium-containing sintered body, and a ceramic separator interposed between the positive electrode layer and the negative electrode layer is known. For example, Patent Literature 1 discloses a lithium secondary battery which is composed of an integrated sintered plate having a positive electrode layer, a ceramic separator, and a negative electrode layer bonded together, and is impregnated with an electrolytic solution. In the lithium secondary battery disclosed in Patent Literature 1, the ceramic separator is composed of MgO and glass. The glass particles contained in the ceramic separator have a specific orientation in the interface between the negative electrode layer and the separator.

Patent Literature 2 discloses a lithium secondary battery which is composed of an integrated sintered plate having a positive electrode layer, a ceramic separator, and a negative electrode layer bonded together, and is impregnated with an electrolyte. In the lithium secondary battery disclosed in Patent Literature 2, the titanium-containing sintered body constituting the negative electrode layer has a specific composition.

### Citation List

### Patent Literature

Patent Literature 1: International Publication No. WO 2019/221144
Patent Literature 2: Japanese Patent No. 6643528

### Summary of Invention

### Technical Problem

With the development of devices in which lithium secondary batteries are used, there is a desire for lithium secondary batteries with excellent durability that maintain their discharge capacity even in the case where charging and discharging are repeated at high speed.

Therefore, one of the objects of the present disclosure is to provide a lithium secondary battery with excellent durability that maintains its discharge capacity even in the case where charging and discharging are repeated at high speed.

### Solution to Problem

A lithium secondary battery according to the present disclosure includes: a positive electrode composed of a sintered body containing lithium cobaltate; a negative electrode; and a separator composed of a sintered body containing magnesia interposed between the positive electrode and the negative electrode. The lithium secondary battery further includes an intermediate layer containing an oxide containing Co and Mg between the positive electrode and the separator.

### Advantageous Effects of Invention

According to the above lithium secondary battery, it is possible to provide a lithium secondary battery with excellent durability that maintains its discharge capacity even in the case where charging and discharging are repeated at high speed.

### Brief Description of Drawings

FIG. 1 is a schematic cross-sectional view showing the structure of a lithium secondary battery according to the present disclosure.
FIG. 2 is an SEM photograph image of a positive electrode, a separator, and an intermediate layer of a lithium secondary battery according to the present disclosure.
FIG. 3 is a graph illustrating EDS analysis results at marking points 4 to 7 shown in FIG. 2.
FIG. 4 is an SEM photograph image of the positive electrode, the separator, and the intermediate layer of a lithium secondary battery according to the present disclosure.
FIG. 5 is a black-and-white binarized image of the intermediate layer portion in FIG. 4.

### Description of Embodiments

### [Outline of Embodiments]

First, embodiments of the present disclosure will be listed and described. A lithium secondary battery of the present disclosure includes: a positive electrode composed of a sintered body containing lithium cobaltate; a negative electrode; and a separator composed of a sintered body containing magnesia interposed between the positive electrode and the negative electrode. The lithium secondary battery further includes an intermediate layer containing an oxide containing Co and Mg between the positive electrode and the separator.

Conventionally, it is known that charge-discharge characteristics of lithium secondary batteries undergo degradation with repeated charging and discharging. It is also known that this phenomenon becomes more pronounced when charging and discharging are repeated at high speed. The inventors have therefore conducted a series of studies to provide a lithium secondary battery with excellent durability that maintains its discharge capacity even in the case where charging and discharging are repeated at high speed. The inventors focused their studies on an integrated sintered plate-type lithium secondary battery in which a positive electrode layer, a ceramic separator, and a negative electrode layer are bonded together. They found that, in a sintered body obtained by integrally firing a positive electrode containing a lithium complex oxide and a separator containing magnesia, interfacial failure might occur at the bonding interface between the positive electrode and the separator when charging and discharging are repeated over a long period of time.

If there occurs failure at the bonding interface between the positive electrode and the separator, the facing positions of the positive electrode, the separator, and the negative electrode may become misaligned. The misalignments of the facing positions may result in direct electron transfer between the positive electrode and the negative electrode, which may cause a small amount of short-circuit current to flow. A short circuit between the positive electrode and the negative electrode can cause significant loss of discharge capacity.

The inventors found that one of the factors causing failure at the interface between the positive electrode and the separator is that the volume change occurs in the positive electrode during charging and discharging, while no volume change occurs in the separator. As a result of the studies, they have found that providing an intermediate layer having a specific composition between the positive electrode layer containing lithium cobaltate and the separator containing magnesia can suppress the degradation of charge-discharge characteristics.

Although not bound by any particular theory, it is considered that, in the lithium secondary battery of the present disclosure, provision of an intermediate layer containing an oxide containing cobalt (Co) and magnesium (Mg) between the positive electrode layer containing lithium cobaltate and the separator containing magnesia can suppress failure at the interface between the positive electrode and the separator. This is considered to suppress the decrease in discharge capacity even when charging and discharging are repeated at high speed, so that a lithium secondary battery with excellent durability that maintains its discharge capacity even in the case where charging and discharging are repeated at high speed can be obtained.

In the above lithium secondary battery, the separator may be a plate-shaped separator including a first main surface and a second main surface located on an opposite side from the first main surface in the thickness direction, and the positive electrode, the intermediate layer, and the separator may constitute an integrated sintered plate. Such a configuration improves the integrity of the positive electrode and the separator, making it possible to provide a compact lithium secondary battery with high energy density.

In the above lithium secondary battery, the intermediate layer may have a thickness of not less than 1 µm and not more than 50 µm. The intermediate layer having a thickness within this range can provide a lithium secondary battery with particularly favorable cycle characteristics. In other words, it is highly effective in suppressing the deterioration of discharge performance during repeated charging and discharging. With the intermediate layer with the thickness of 1 µm or more, the effect of the presence of the intermediate layer becomes clearer. With the intermediate layer with the thickness of 50 µm or less, the degree to which the diffusion of lithium ions is inhibited by the intermediate layer is sufficiently low, which is considered to improve the cycle characteristics.

In the above lithium secondary battery, the intermediate layer may have a porosity of not less than 15% and not more than 50%. With the porosity of the intermediate layer within this numerical range, it is readily possible to fill the pores with an electrolyte leaving no gaps. This enables faster charging and discharging, without the intermediate layer significantly hindering the transfer of Li between the positive and negative electrodes during charging and discharging.

In the above lithium secondary battery, an average particle size of the particles constituting the intermediate layer may be not less than 1 µm and not more than 10 µm. Here, the average particle size is an average value of lengths through which the oxide constituting the intermediate layer is present continuously. By the intermediate layer being formed by the aggregation of particles and, further, by having the average particle size of the particles within this numerical range, the sintered strength between the particles is improved, the interfacial failure within the intermediate layer is less likely to occur, and the effect of maintaining the charge-discharge characteristics is further improved.

In the above lithium secondary battery, a ratio Mg/Co of elemental amounts of Mg and Co present in the intermediate layer may decrease from a side in contact with the separator to a side in contact with the positive electrode. In the intermediate layer, by having a relatively high Mg content ratio on the side close to the separator containing magnesia and a relatively high Co content ratio on the side close to the positive electrode containing cobalt, the continuity of the intermediate layer and separator and the continuity of the intermediate layer and positive electrode are further improved. This makes interfacial failure less likely to occur, and further enhances the effect of maintaining the charge-discharge characteristics.

In the above lithium secondary battery, the intermediate layer may have a first portion and a second portion, and the first portion may have a porosity different from a porosity of the second portion. In other words, the intermediate layer may have a first portion and a second portion with different porosities from each other. Having portions with different porosities can further suppress the propagation of strain due to expansion and contraction of the positive electrode layer, which further improves the continuity between the intermediate layer and separator and between the intermediate layer and positive electrode, making interfacial failure less likely to occur, and further enhancing the effect of maintaining the charge-discharge characteristics.

### [Specific Embodiments]

Specific embodiments of the lithium secondary battery of the present disclosure will be described below with reference to the drawings. In the drawings referenced below, the same or corresponding portions are denoted by the same reference numerals and the description thereof will not be repeated.

### (Embodiment 1)

### (Lithium Secondary Battery)

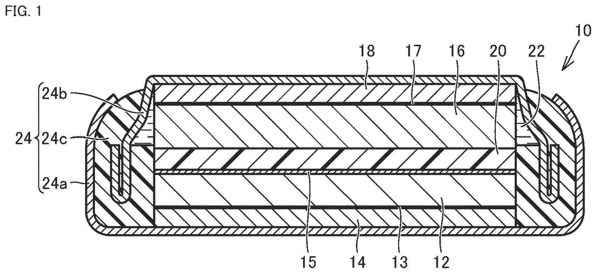

FIG. 1 is a schematic cross-sectional view showing the structure of a lithium secondary battery according to an embodiment of the present disclosure. Referring to FIG. 1, the lithium secondary battery 10 includes a positive electrode layer 12, a negative electrode layer 16, a separator 20, an intermediate layer 15, an electrolytic solution 22, and an exterior body 24. The positive electrode layer 12 is composed of a sintered body containing lithium cobaltate. The negative electrode layer 16 is composed of, for example, a titanium-containing sintered body. The separator 20 is made of ceramic, and is interposed between the positive electrode layer 12 and the negative electrode layer 16. The intermediate layer 15 is located between the positive electrode layer 12 and the separator 20. The electrolytic solution 22 is impregnated into the positive electrode layer 12, the negative electrode layer 16, the intermediate layer 15, and the separator 20.

The exterior body 24 includes a closed space, and the positive electrode layer 12, the intermediate layer 15, the negative electrode layer 16, the separator 20, and the electrolytic solution 22 are accommodated in the closed space. The positive electrode layer 12, the intermediate layer 15, the separator 20, and the negative electrode layer 16 as a whole form one integrated sintered body plate. That is, the positive electrode layer 12, the intermediate layer 15, the separator 20, and the negative electrode layer 16 are bonded together. As used herein, to "form one integrated sintered plate" means that the four layers of the positive electrode layer 12, the intermediate layer 15, the separator 20, and the negative electrode layer 16 are connected with and bonded to each other without relying on an adhesive or other bonding technique. Alternatively, the positive electrode layer 12, the intermediate layer 15, and the separator 20 may form an integrated sintered plate, while the negative electrode layer 16 may be a sintered body formed separately from that integrated sintered plate.

The exterior body 24 may be selected as appropriate in accordance with the type of the lithium secondary battery 10. For example, in the case where the lithium secondary battery is in a coin-type battery form as shown in FIG. 1, the exterior body 24 typically includes a positive electrode can 24a, a negative electrode can 24b, and a gasket 24c, and the positive electrode can 24a and the negative electrode can 24b are crimped via the gasket 24c to form a closed space. The positive electrode can 24a and the negative electrode can 24b can be made of a stainless steel or other metal, and are not particularly limited. The gasket 24c can be an annular member made of insulating resin such as polypropylene, polytetrafluoroethylene, PFA resin, or the like, and is not particularly limited.

While the lithium secondary battery 10 shown in FIG. 1 is in a coin-type battery form, the lithium secondary battery according to the present disclosure is not limited to this form, and may be in another form such as a thin secondary battery including a chip-type secondary battery and a pouch-type secondary battery. In the case where the lithium secondary battery is a chip battery that can be incorporated in a card, the exterior body is preferably a resin substrate, and the battery elements (that is, the positive electrode layer 12, the negative electrode layer 16, the separator 20, and the electrolytic solution 22) are preferably embedded in the resin substrate. For example, in the case where the lithium secondary battery is a pouch-type secondary battery, the battery elements may be sandwiched between a pair of resin films. The pair of resin films may be attached to each other with an adhesive. The pair of resin films may be thermally fused together by hot pressing.

Referring to FIG. 1, the lithium secondary battery 10 includes a positive electrode current collector 14 and a negative electrode current collector 18. The positive electrode current collector 14 and the negative electrode current collector 18, although not particularly limited, are preferably metal foils such as copper foils or aluminum foils. The positive electrode current collector 14 is preferably arranged between the positive electrode layer 12 and the exterior body 24 (e.g., positive electrode can 24a). The negative electrode current collector 18 is preferably arranged between the negative electrode layer 16 and the exterior body 24 (e.g., negative electrode can 24b). Further, it is preferable that a positive electrode-side carbon layer 13 is provided between the positive electrode layer 12 and the positive electrode current collector 14 from the standpoint of reducing the contact resistance. Similarly, a negative electrode-side carbon layer 17 is preferably provided between the negative electrode layer 16 and the negative electrode current collector 18 for reducing the contact resistance. The positive electrode-side carbon layer 13 and the negative electrode-side carbon layer 17 are each preferably composed of conductive carbon, and may be formed, for example, by applying a conductive carbon paste by screen printing or the like.

### (Positive Electrode Layer)

The positive electrode layer 12 is configured with a plate-shaped sintered body containing lithium cobaltate. The positive electrode layer 12 may include no binder and no conductive agent. A specific example of the lithium cobaltate is LiCoO₂ (which may be hereinafter abbreviated as LCO). For the LCO sintered body formed in a plate shape, those disclosed in Japanese Patent No. 5587052 and International Publication No. WO 2017/146088, for example, can be used. The positive electrode layer 12 is preferably an oriented positive electrode layer that contains a plurality of primary particles composed of lithium cobaltate, the primary particles being oriented at an average orientation angle of greater than 0° and not greater than 30° with respect to a layer surface of the positive electrode layer. The structure, composition, and method for identification of such an oriented positive electrode layer may be, for example, those disclosed in Patent Literature 1 (International Publication No. WO 2019/221144).

Examples of the lithium cobaltate constituting the primary particles, besides LCO, include LiₓNiCoO₂ (lithium nickel cobaltate), LiₓCoNiMnO₂ (lithium cobalt nickel manganate), and LiₓCoMnO₂ (lithium cobalt manganate). Another lithium complex oxide may be contained together with the lithium cobaltate. The lithium complex oxide may be, for example, an oxide expressed by LiₓMPO₂ (where 0.05<x<1.10, M is at least one transition metal, and M typically contains one or more of Co, Ni, and Mn).

The primary particles constituting the positive electrode layer 12 have an average particle size of preferably 5 µm or more. Specifically, the average particle size of the primary particles used for calculation of an average orientation angle is preferably 5 µm or more, more preferably 7 µm or more, and further preferably 12 µm or more.

The positive electrode layer 12 may include pores. A sintered body including pores, in particular open pores, allows an electrolytic solution to penetrate into the sintered body when the same is incorporated into a battery as the positive electrode layer, thereby improving lithium ion conductivity. The positive electrode layer 12 has a porosity of preferably 20% to 60%, more preferably 25% to 55%, further preferably 30% to 50%, and particularly preferably 30% to 45%. The porosity of a sintered body can be measured using a method described later in EXAMPLES.

The positive electrode layer 12 has an average pore diameter of preferably 0.1 to 10.0 µm, more preferably 0.2 to 5.0 µm, and further preferably 0.25 to 3.0 µm. The average pore diameter within the above range can suppress occurrence of locally induced stress concentration in large pores, and facilitates uniform release of stress in the sintered body. It also makes it possible to more effectively achieve improvement of lithium ion conductivity by virtue of internal penetration of the electrolytic solution through the pores.

The positive electrode layer 12 has a thickness of preferably 60 to 600 µm, more preferably 60 to 500 µm, and further preferably 70 to 400 µm. With the thickness within such a range, the active material capacity per unit area is increased, leading to improved energy density of the lithium secondary battery 10, also suppressing the deterioration in battery characteristics (particularly, the increase in resistance value) due to repeated charging and discharging.

### (Separator)

The separator 20 is a plate-shaped separator that includes a first main surface and a second main surface located on an opposite side from the first main surface in the thickness direction. The negative electrode layer 16 is arranged in contact with the first main surface of the separator 20. Arranged on the second main surface side of the separator 20 is the intermediate layer 15. The separator 20 and the intermediate layer 15 are integrally sintered and are continuous. The separator 20 is a microporous film made of ceramic. The separator 20 is excellent in heat resistance, and can be produced together with the positive electrode layer 12 and the intermediate layer 15 as one integrated sintered body plate as a whole. In the integrated sintered plate, the negative electrode layer 16 may further be integrated together.

The separator 20 contains magnesia (MgO). Specifically, for example, the separator 20 can be composed of magnesia (MgO) and glass. In the separator 20, MgO and glass are present in a form of particles bound together by sintering. The ceramic included in the separator 20 may contain, besides MgO and glass, Al₂O₃, ZrO₂, SiC, Si₃N₄, AlN, and the like.

The glass contained in the separator 20 contains SiO₂ in an amount of preferably 25 wt% or more, more preferably 30 to 95 wt%, further preferably 40 to 90 wt%, and particularly preferably 50 to 80 wt%. The content of the glass in the separator 20 is preferably 3 to 70 wt%, more preferably 5 to 50 wt%, further preferably 10 to 40 wt%, and particularly preferably 15 to 30 wt% with respect to the total weight of the separator 20. With the content within the above range, a high yield and excellent charge-discharge cycle characteristics can both be achieved effectively. A preferable way of adding the glass component to the separator 20 is adding glass frit to the raw material powder of the separator. The glass frit preferably contains one or more of Al₂O₃, B₂O₃, and BaO as the component(s) other than SiO₂.

The separator 20 has a thickness of preferably 5 to 50 µm, more preferably 5 to 40 µm, further preferably 5 to 35 µm, and particularly preferably 8 to 30 µm. The porosity of the separator 20 is preferably 30% to 85%, and more preferably 40% to 80%.

### (Intermediate Layer)

The intermediate layer 15 is a layer formed between the positive electrode layer 12 and the separator 20. The positive electrode layer 12 and the separator 20 are sintered integrally on a first main surface side and a second main surface side, respectively, of the intermediate layer 15. The intermediate layer 15 may be distinguished from the positive electrode layer 12 and the separator 20 present on both sides thereof mainly by the difference in composition. The way of identifying the location of the intermediate layer 15 in the composite of the integrally sintered positive electrode layer 12, intermediate layer 15, and separator 20 will be described in detail in EXAMPLES.

The intermediate layer 15 contains an oxide containing cobalt (Co) and magnesium (Mg). The oxide containing cobalt and magnesium may be, for example, a composition of LCO and MgO mixed in a ratio of 3:1 to 5:1. The oxide containing cobalt is not limited to LCO, and the examples include CoO, Co₃O₄, Co₂O₃, CoFe₂O₄, CoMoO₄, CoTiOs, and CoWO₄. The oxide containing Mg is not limited to MgO, and the examples include MgAl₂O₄, MgFe₂O₄, MgMoO₄, MgTiO₃, MgWO₄, and MgSiOs. The oxide containing cobalt and magnesium may be an oxide (Coₓ,Mg_{y})O (where x+y=1) or (Coₓ,Mg_{y})₃O₄ (where x+y=1) in which cobalt and magnesium are present in a state of solid solution, or may be a mixture of these oxides.

The thickness of the intermediate layer 15, although not particularly limited, is preferably 0.5 to 70 µm, and more preferably 1 to 50 µm. It is considered that with the intermediate layer 15 of the thickness of 1 µm or more, the effect of preventing interfacial failure between the positive electrode layer 12 and the separator 20 can be obtained even in the case where charging and discharging are repeated. It is also considered that with the intermediate layer 15 of the thickness of 50 µm or less, the distance between the positive electrode layer 12 and the negative electrode layer 16 is not too far apart, and the degree to which diffusion of lithium ions is inhibited during charging and discharging is sufficiently low, leading to improved cycle characteristics.

The intermediate layer 15 has a structure in which a plurality of (i.e., a large number of) primary particles are bound together. These primary particles are preferably composed of an oxide containing cobalt (Co) and magnesium (Mg). A primary particle size, which is the average particle size of the primary particles constituting the intermediate layer 15, is preferably 20 µm or less, more preferably 0.5 to 15 µm, and further preferably 1 to 10 µm. The particle size within these ranges improves the sintered strength between the particles, in which case cohesive failure is less likely to occur in the intermediate layer, further enhancing the effect of maintaining the charge-discharge characteristics. The average particle size is an average value of lengths through which the oxide constituting the intermediate layer is present continuously. The specific way of measuring the same will be described in detail in EXAMPLES.

The intermediate layer 15 preferably includes pores. A sintered body including pores, in particular open pores, allows the electrolytic solution to penetrate into the sintered body when the same is incorporated into a battery as one piece with the positive electrode layer 12, thereby improving lithium ion conductivity. The intermediate layer 15 has a porosity of preferably 5% to 60%, more preferably 10% to 55%, and further preferably 15% to 50%. The intermediate layer 15 may have an average pore diameter of 0.05 to 20 µm, which is preferably 0.1 to 15 µm, and more preferably 0.15 to 10 µm.

The intermediate layer 15 may be uniform in composition over the entire area in its thickness direction, or the composition may vary in the thickness direction. Specifically, for example, the ratio of elemental amounts of Mg and Co (e.g., Mg/Co) may vary in the thickness direction of the intermediate layer. More specifically, for example, in the intermediate layer 15, Mg/Co preferably decreases from the side in contact with the separator 20 toward the side in contact with the positive electrode layer 12. In other words, it is preferable that in the intermediate layer 15, the Mg content ratio is higher in the side close to the separator 20 than in the side close to the positive electrode layer 12. The way of measuring the element content ratio in the intermediate layer 15 will be described in detail in EXAMPLES.

The intermediate layer 15 may be composed of a single portion or of two or more portions. Specifically, the intermediate layer 15 may include two portions of first and second portions, or three portions of first, second, and third portions. In the case of including two or more portions, each portion may have a composition, properties, and/or a structure different from each other. For example, in the first and second portions in the intermediate layer 15, the first and second portions may differ in porosity from each other. In other words, the intermediate layer 15 may include two or more portions differing in porosity. For example, the first portion may have a porosity of 5% to 20% and the second portion may have a porosity of 20% to 60%. In this case, a suitable configuration is that the first portion is provided in the vicinity of the interface in contact with the separator 20 or the interface in contact with the positive electrode layer 12, and the second portion is provided in the inside not in contact with the separator 20 or the positive electrode layer 12. Further, for example, the intermediate layer 15 may be composed of three portions of first, second, and third portions. In this case, it is preferably configured such that the porosity is relatively low in the first portion close to the positive electrode layer 12 and in the third portion close to the separator 20, and the porosity is relatively high in the second portion located in the middle. Such a configuration can further suppress the propagation of strain due to expansion and contraction of the positive electrode layer 12, leading to better continuity between the intermediate layer 15 and the separator 20 and between the separator 20 and the positive electrode layer 12, in which case adhesive failure is less likely to occur, whereby the effect of maintaining the charge-discharge characteristics is further enhanced.

The intermediate layer 15, which is fired integrally with the positive electrode layer 12 and the separator 20, can be obtained by, for example, sandwiching an intermediate layer green sheet between a positive electrode green sheet and a separator green sheet and firing them. Alternatively, it is possible to generate an intermediate layer by firing a positive electrode green sheet and a separator green sheet under specific firing conditions. These methods will be described in detail in EXAMPLES.

### (Negative Electrode Layer)

The negative electrode layer 16 is composed of, for example, a plate-shaped sintered body containing a titanium-containing composition. The negative electrode layer 16 may include no binder and no conductive agent. The titanium-containing sintered body preferably contains lithium titanate, Li₄Ti₅O₁₂ (hereinafter, LTO), or niobium titanium complex oxide, Nb₂TiO₇, and more preferably contains LTO. While LTO is known to have typically a spinel structure, it may take another structure during charging and discharging. For example, the reaction of LTO proceeds in a two-phase coexistence of Li₄Ti₅O₁₂ (spinel structure) and Li₇Ti₅O₁₂ (rock-salt structure) during charging and discharging. Accordingly, the structure of LTO is not limited to the spinel structure. The LTO may be partially substituted with another element. Examples of the other element include Nb, Ta, W, Al, and Mg. The LTO sintered body may be produced using, for example, the method described in Japanese Patent Application Laid-Open No. 2015-185337.

The negative electrode layer 16 has a structure in which a plurality of (i.e., a large number of) primary particles are bound together. These primary particles are preferably composed of LTO or Nb₂TiO₇. The negative electrode layer 16 may be configured as an integrated sintered body together with the positive electrode layer12, the intermediate layer 15, and the separator 20. Alternatively, the negative electrode layer 16 may be configured as another sintered body different from the integrated sintered body of the positive electrode layer 12, the intermediate layer 15, and the separator 20, and the sintered bodies may be assembled in the lithium secondary battery 1.

The negative electrode layer 16 has a thickness of preferably 70 to 800 µm, more preferably 70 to 700 µm, further preferably 85 to 600 µm, and particularly preferably 95 to 500 µm. A primary particle size, which is the average particle size of the primary particles constituting the negative electrode layer 16, is preferably 1.2 µm or less, more preferably 0.02 to 1.2 µm, and further preferably 0.05 to 0.7 µm.

The negative electrode layer 16 preferably includes pores. A sintered body including pores, in particular open pores, allows the electrolytic solution to penetrate into the sintered body when the same is incorporated into a battery as the negative electrode layer, thereby improving lithium ion conductivity. The negative electrode layer 16 has a porosity of preferably 20% to 60%, more preferably 30% to 55%, and further preferably 35% to 50%. The negative electrode layer 16 has an average pore diameter of preferably 0.08 to 5.0 µm, more preferably 0.1 to 3.0 µm, and further preferably 0.12 to 1.5 µm.

The negative electrode layer 16 is not limited to one composed of a ceramic sintered body, and may be a so-called coated electrode. For example, the negative electrode layer 16 may be a carbon coated film that contains a mixture of an active material such as LTO or graphite and a binder such as PVDF.

### (Electrolytic Solution)

The electrolytic solution 22 is not particularly limited, and an electrolytic solution known as the electrolytic solution for a lithium secondary battery may be used. For example, as a solvent, one or a combination of two or more selected from ethylene carbonate (EC), methyl ethyl carbonate (MEC), diethyl carbonate (DEC), ethyl methyl carbonate (EMC), propylene carbonate (PC), and γ-butyrolactone (GBL) can be used. As an electrolyte dissolved in the solvent, for example, a lithium salt compound such as lithium hexafluorophosphate (LiPF₆) or lithium tetrafluoroborate (LiBF₄) can be used. The electrolytic solution 22 may further contain, as an additive, at least one selected from vinylene carbonate (VC), fluoroethylene carbonate (FEC), vinyl ethylene carbonate (VEC), and lithium difluoro(oxalato)borate (LiDFOB).

The concentration of the electrolyte in the electrolytic solution 22 is preferably 0.5 to 2 mol/L, more preferably 0.6 to 1.9 mol/L, further preferably 0.7 to 1.7 mol/L, and particularly preferably 0.8 to 1.5 mol/L.

Further, as the electrolyte, a solid electrolyte or a polymer electrolyte can be used in place of the electrolytic solution 22. In such a case, as in the case of the electrolytic solution 22, the electrolyte is preferably impregnated at least inside the pores of the separator 20. The method of impregnation is not particularly limited, and examples include melting the electrolyte and infiltrating it into the pores of the separator 20, and pressing the green compact of the electrolyte against the separator 20.

### [EXAMPLES]

The lithium secondary battery of the present disclosure will now be described in more detail by showing Examples and Comparative Examples.

### [Example 1]

A lithium secondary battery was produced in accordance with a method described in 1. through 3. below. The resultant lithium secondary battery was evaluated in accordance with methods described in 4. and 5.

### 1. Fabrication of Separator-Integrated Positive Electrode 1a. Fabrication of LCO Green Sheet (Positive Electrode Green Sheet)

First, Co₃O₄ powder (produced by Seido Chemical Industry Co., Ltd.) and Li₂CO₃ powder (produced by The Honjo Chemical Corporation), weighed to a Li/Co molar ratio of 1.01, were mixed, and then held at 780°C for five hours. The resultant powder was pulverized in a pot mill to have a volume-based D50 of 0.4 µm, thereby obtaining powder of plate-shaped LCO particles. Then, 100 parts by weight of the resultant LCO powder, 100 parts by weight of a dispersion medium (toluene:isopropanol = 1:1), 10 parts by weight of a binder (polyvinyl butyral: product number BM-2, produced by SEKISUI CHEMICAL CO., LTD.), 4 parts by weight of a plasticizer (DOP: Di(2-ethylhexyl) phthalate, produced by Kurogane Kasei Co., Ltd.), and 2 parts by weight of a dispersant (product name: RHEODOL SP-O30, produced by Kao Corporation) were mixed. The resultant mixture was stirred and defoamed under reduced pressure and adjusted to have a viscosity of 4000 cP, whereby an LCO slurry was prepared. The viscosity was measured using an LVT viscometer produced by AMETEK Brookfield, Inc. The slurry thus prepared was formed into a sheet shape on a PET film by doctor blading, to thereby form an LCO green sheet. The LCO green sheet was made to have a thickness of 200 µm after firing.

### 1b. Fabrication of MgO Green Sheet (Separator Green Sheet)

Magnesium carbonate powder (produced by Konoshima Chemical Co., Ltd.) was heat-treated at 900°C for five hours to obtain MgO powder. The resultant MgO powder and glass frit (CK0199, produced by Nippon Frit Co., Ltd.) were mixed in a weight ratio of 4:1. Then, 100 parts by weight of the resultant mixed powder (volume-based D50 particle size: 0.4 µm), 100 parts by weight of a dispersion medium (toluene:isopropanol = 1:1), 20 parts by weight of a binder (polyvinyl butyral: product number BM-2, produced by SEKISUI CHEMICAL CO., LTD.), 4 parts by weight of a plasticizer (DOP: Di(2-ethylhexyl) phthalate, produced by Kurogane Kasei Co., Ltd.), and 2 parts by weight of a dispersant (product name: RHEODOL SP-O30, produced by Kao Corporation) were mixed. The resultant mixture of raw materials was stirred and defoamed under reduced pressure and adjusted to have a viscosity of 4000 cP, whereby a slurry was prepared. The viscosity was measured using an LVT viscometer produced by AMETEK Brookfield, Inc. The slurry thus prepared was formed into a sheet shape on a PET film by doctor blading, to thereby form an MgO green sheet. The MgO green sheet was made to have a thickness of 10 µm after firing.

### 1c. Fabrication of LCO-MgO Mixed Green Sheet (Intermediate Layer Green Sheet)

First, Co₃O₄ powder (produced by Seido Chemical Industry Co., Ltd.) and Li₂CO₃ powder (produced by The Honjo Chemical Corporation), weighed to a Li/Co molar ratio of 1.01, were mixed, and then held at 780°C for five hours. The resultant powder was pulverized in a pot mill to have a volume-based D50 of 7 µm, thereby obtaining powder of plate-shaped LCO particles.

Next, magnesium carbonate powder (produced by Konoshima Chemical Co., Ltd.) was heat-treated at 900°C for five hours to obtain MgO powder.

The resultant LCO powder and MgO powder were mixed in a weight ratio of 4:1. Then, 100 parts by weight of the resultant mixed powder, 100 parts by weight of a dispersion medium (toluene:isopropanol = 1:1), 20 parts by weight of a binder (polyvinyl butyral: product number BM-2, produced by SEKISUI CHEMICAL CO., LTD.), 4 parts by weight of a plasticizer (DOP: Di(2-ethylhexyl) phthalate, produced by Kurogane Kasei Co., Ltd.), and 2 parts by weight of a dispersant (product name: RHEODOL SP-O30, produced by Kao Corporation) were mixed. The resultant mixture of raw materials was stirred and defoamed under reduced pressure and adjusted to have a viscosity of 4000 cP, whereby a slurry was prepared. The viscosity was measured using an LVT viscometer produced by AMETEK Brookfield, Inc. The slurry thus prepared was formed into a sheet shape on a PET film by doctor blading, to thereby form an LCO-MgO mixed green sheet. The LCO-MgO mixed green sheet was made to have a thickness of 15 µm after firing.

### 1d. Fabrication of Separator-Integrated Positive Electrode Plate (Stacking, Pressure Bonding, and Firing of Green Sheets)

The positive electrode green sheet, the intermediate layer green sheet, and the separator green sheet were stacked in order, and the resultant stack was pressed at 200 kgf/cm² by cold isostatic pressing (CIP) to pressure-bond the green sheets together. The laminate thus pressure-bonded was stamped with a stamping die into a circular plate shape with a diameter of 10 mm. The resultant circular plate-shaped laminate was debindered at 600°C for five hours, and then subj ected to firing in which the temperature was increased to 800°C at 1000°C/h and held for 10 minutes, and then cooled. In this manner, a separator-integrated positive electrode plate including three layers of positive electrode layer (LCO sintered body layer), intermediate layer, and separator layer (MgO separator layer) was obtained.

### 1e. Adhesion of Positive Electrode Current Collector with Conductive Carbon Paste

Acetylene black and polyamide-imide were weighted to have a mass ratio of 3:1 and mixed together with an appropriate amount of NMP (N-methyl-2-pyrrolidone) as a solvent, to prepare a conductive carbon paste as a conductive adhesive. The conductive carbon paste was then applied by screen printing on an aluminum foil serving as a positive electrode current collector. The separator-integrated positive electrode plate was placed to fit within an undried print pattern (i.e., a region coated with the conductive carbon paste) so as to have its positive electrode surface adhered, and was dried under vacuum at 60°C for 30 minutes to thereby fabricate a separator-integrated positive electrode in which the separator-integrated positive electrode plate and the positive electrode current collector were adhered via the positive electrode-side carbon layer. The positive electrode-side carbon layer was made to have a thickness of 10 µm.

### 2. Fabrication of Negative Electrode

### 2a. Fabrication of LTO Green Sheet (Negative Electrode Green Sheet)

First, 100 parts by weight of LTO powder (volume-based D50 particle size: 0.06 µm, produced by Sigma-Aldrich Japan K.K.), 100 parts by weight of a dispersion medium (toluene:isopropanol = 1:1), 20 parts by weight of a binder (polyvinyl butyral: product number BM-2, produced by SEKISUI CHEMICAL CO., LTD.), 4 parts by weight of a plasticizer (DOP: Di(2-ethylhexyl) phthalate, produced by Kurogane Kasei Co., Ltd.), and 2 parts by weight of a dispersant (product name: RHEODOL SP-O30, produced by Kao Corporation) were mixed. The resultant negative electrode raw material mixture was stirred and defoamed under reduced pressure and adjusted to have a viscosity of 4000 cP, whereby an LTO slurry was prepared. The viscosity was measured using an LVT viscometer produced by AMETEK Brookfield, Inc. The slurry thus prepared was formed into a sheet shape on a PET film by doctor blading, to thereby form an LTO green sheet. The LTO green sheet was made to have a thickness of 275 µm after firing.

### 2b. Fabrication of Negative Electrode Plate (Firing of LTO Green Sheet)

The LTO green sheet was stamped with a stamping die into a circular plate shape with a diameter of 9.8 mm. The resultant circular plate-shaped laminate was debindered at 600°C for five hours, and then subjected to firing in which the temperature was increased to 800°C at 1000°C/h and held for 10 minutes, and then cooled. In this manner, a negative electrode plate was obtained.

### 2c. Adhesion of Negative Electrode Current Collector with Conductive Carbon Paste

Acetylene black and polyamide-imide were weighted to have a mass ratio of 3:1 and mixed together with an appropriate amount of NMP (N-methyl-2-pyrrolidone) as a solvent, to prepare a conductive carbon paste as a conductive adhesive. The conductive carbon paste was then applied by screen printing on an aluminum foil serving as a negative electrode current collector. The negative electrode plate was placed to fit within an undried print pattern (i.e., a region coated with the conductive carbon paste) and was dried under vacuum at 60°C for 30 minutes, to thereby fabricate a negative electrode in which the negative electrode plate and the negative electrode current collector were adhered via the negative electrode-side carbon layer. The negative electrode-side carbon layer was made to have a thickness of 10 µm.

### 3. Fabrication of Lithium Secondary Battery

The positive electrode current collector, the positive electrode-side carbon layer, the separator-integrated positive electrode plate, the negative electrode plate, the negative electrode-side carbon layer, and the negative electrode current collector were housed in between a positive electrode can and a negative electrode can, which are to constitute the battery case, so as to be stacked in this order from the positive electrode can toward the negative electrode can. After being filled with the electrolytic solution, the positive electrode can and the negative electrode can were crimped via a gasket for sealing. In this manner, a coin cell-type lithium secondary battery with a diameter of 12 mm and a thickness of 1.0 mm was fabricated. The electrolytic solution used at this time was a solution of LiBF₄ dissolved in an organic solvent of ethylene carbonate (EC) and γ-butyrolactone (GBL) mixed in a volume ratio of 1:3 so as to achieve a LiBF₄ concentration of 1.5 mol/L.

### 4. Evaluation of Intermediate Layer

### 4a. Composition Analysis of Separator-Integrated Positive Electrode Plate and Measurement of Thickness of Intermediate Layer

The separator-integrated positive electrode plate was polished with a cross section polisher (CP) (IB-15000CP, produced by JEOL Ltd.), and the resultant cross section was observed with an SEM (JSM-IT-500, produced by JEOL Ltd.). Further, the resultant SEM image was subjected to a point analysis by EDS on a perpendicular line to the laminated surfaces of the separator layer, intermediate layer, and positive electrode layer, from the separator toward the positive electrode, to obtain the elemental ratio of Co and Mg. During the point analysis conducted by EDS on the SEM image of the intermediate layer, the first point where Mg/Co<1 was defined as an end on the separator side of the intermediate layer (initial point of the intermediate layer), and the first point where Mg/Co<0.01 (i.e., the point where the Mg amount became less than 1% relative to the Co amount) was defined as an end on the positive electrode side of the intermediate layer (final point of the intermediate layer), and the distance between the two points was defined as the thickness of the intermediate layer.

### 4b. Measurement of Porosity of Intermediate Layer in Separator-Integrated Positive Electrode

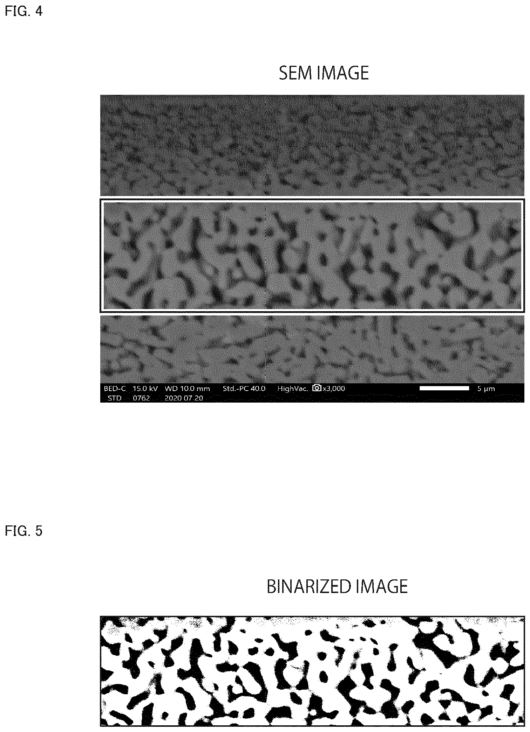

The separator-integrated positive electrode plate was polished with a cross section polisher (CP) (IB-15000CP, produced by JEOL Ltd.), and the resultant cross section was observed with an SEM (JSM-IT-500, produced by JEOL Ltd.). Further, of the SEM image obtained, the portion constituting the intermediate layer was subjected to binarization processing using image analysis software "ImageJ" to show the sintered body portions as white and the pores as black, so as to keep clear the boundaries between the sintered body and pore portions. In the resultant binarized image, the area of the white portions and the area of the black portions were obtained and used to calculate a value of "total area of black portions / (total area of white portions + total area of black portions) × 100", and the resultant value was set to be a porosity. The SEM image and the binarized image are shown in FIG. 4 and FIG. 5, respectively.

### 4c. Measurement of Particle Size Constituting Intermediate Layer in Separator-Integrated Positive Electrode

The separator-integrated positive electrode plate was polished with a cross section polisher (CP) (IB-15000CP, produced by JEOL Ltd.), and the resultant cross section was observed with an SEM (JSM-IT-500, produced by JEOL Ltd.). Further, for the portion constituting the intermediate layer in the obtained SEM image, five lines perpendicular to the laminated surfaces were drawn arbitrarily, and the length through which the oxide constituting the intermediate layer is present continuously on each of the lines was measured. An average value of the thus obtained lengths was set to be an average particle size.

### 5. Evaluation of Cycle Characteristics

### 5a. Evaluation of Battery Initial Capacity

The obtained battery was used to check the battery capacity in an environment of 25°C. Charging was performed at a constant current of 0.2 C until the voltage reached 2.7 V Discharging was performed at a constant current of 0.2 C until the voltage reached 1.5 V The discharge capacity thus obtained was set to be the initial capacity.

### 5b. High-Speed Charge-Discharge Cycle Test

Subsequently, a high-speed charge-discharge cycle test was conducted. The charge-discharge cycle test was performed in an environment of 25°C by repeating charging and discharging 1000 times. Charging was performed at a constant voltage of 2.7 V until the current value reached 0.2 C. Discharging was performed at a constant current of 1 C until the voltage reached 1.5 V

5c. Evaluation of Capacity Retention Rate after 1000 Cycles For the battery that has undergone 1000 charge-discharge cycles, the battery capacity was checked in an environment of 25°C. Charging was performed at a constant current of 0.2 C until the voltage reached 2.7 V Discharging was performed at a constant current of 0.2 C until the voltage reached 1.5 V The discharge capacity thus obtained was set to be the capacity after 1000 cycles. In addition, this value was divided by the initial capacity and multiplied by 100, to obtain the capacity retention rate (%) after 1000 cycles.

### [Example 2]

A separator-integrated positive electrode, a negative electrode, and a lithium secondary battery were fabricated and the evaluations were conducted in the same manner as in Example 1, except that in the fabrication of an LCO-MgO mixed green sheet (intermediate layer green sheet), the volume-based D50 of the particles of the LCO powder to be mixed with the MgO powder was set to 0. 5 µm and the amount of the binder was set to 10 parts by weight.

### [Example 3]

A separator-integrated positive electrode, a negative electrode, and a lithium secondary battery were fabricated and the evaluations were conducted in the same manner as in Example 1, except that in the fabrication of an LCO-MgO mixed green sheet (intermediate layer green sheet), the volume-based D50 of the particles of the LCO powder to be mixed with the MgO powder was set to 4 µm and the amount of the binder was set to 8 parts by weight.

### [Example 4]

For the laminate, without fabricating an LCO-MgO mixed green sheet (intermediate layer green sheet), only a positive electrode green sheet and a separator green sheet were stacked and pressure-bonded. Subsequently, the pressure-bonded laminate was debindered at 600°C for five hours, and then subjected to firing in which the temperature was increased to 950°C at 1000°C/h and held for 20 hours, and then cooled. In this manner, a separator-integrated positive electrode plate including three layers of positive electrode layer (LCO sintered body layer), intermediate layer, and separator layer (MgO separator layer) was obtained. Otherwise, a separator-integrated positive electrode, a negative electrode, and a lithium secondary battery were fabricated and the evaluations were conducted in the same manner as in Example 1.

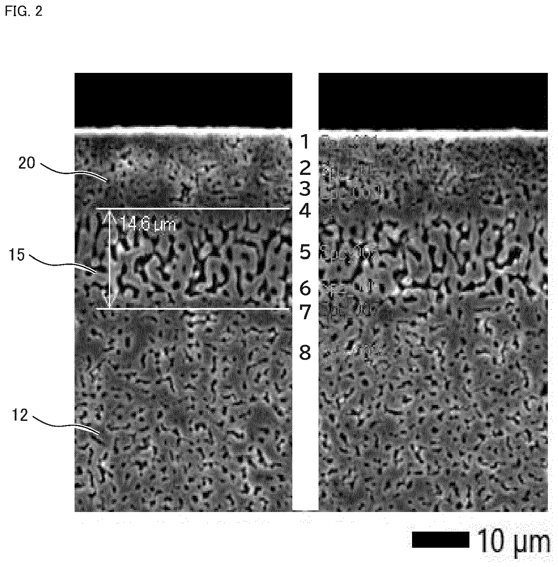

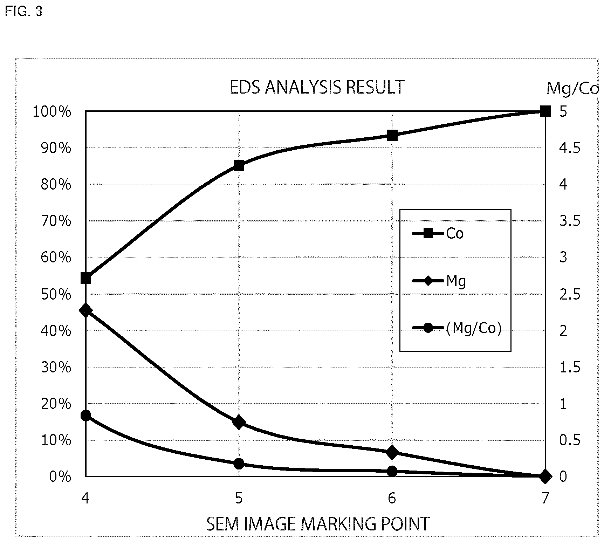

An SEM image of the separator-integrated positive electrode plate obtained in Example 4 is shown in FIG. 2. EDS analysis results at points in the intermediate layer (points 4 to 7) marked in the SEM image in FIG. 2 are shown in FIG. 3. As shown in FIG. 3, the Co content ratio, indicated by the square labels, increased in the intermediate layer from the separator side (point 4) to the positive electrode layer side (point 7), and Co became close to 100% in the positive electrode layer. The Mg content ratio, indicated by the diamond-shaped labels, decreased monotonically in the intermediate layer from the separator side to the positive electrode layer side. The Mg/Co ratio increased monotonically in the intermediate layer from the separator side (point 4) to the positive electrode layer side (point 7).

### [Example 5]

A separator-integrated positive electrode, a negative electrode, and a lithium secondary battery were fabricated and the evaluations were conducted in the same manner as in Example 4, except that the pressure-bonded laminate was debindered at 600°C for five hours, and then subjected to firing in which the temperature was increased to 950°C at 1000°C/h and held for 30 minutes.

### [Example 6]

A separator-integrated positive electrode, a negative electrode, and a lithium secondary battery were fabricated and the evaluations were conducted in the same manner as in Example 1, except that in the fabrication of an LCO-MgO mixed green sheet (intermediate layer green sheet), the volume-based D50 of the particles of the LCO powder to be mixed with the MgO powder was set to 10 µm, the amount of the binder was set to 30 parts by weight, and the green sheet was made to have a thickness of 50 µm after firing.

### [Example 7]

A separator-integrated positive electrode, a negative electrode, and a lithium secondary battery were fabricated and the evaluations were conducted in the same manner as in Example 4, except that the pressure-bonded laminate was debindered at 600°C for five hours, and then subjected to firing in which the temperature was increased to 950°C at 1000°C/h and held for 5 minutes.

### [Example 8]

A separator-integrated positive electrode, a negative electrode, and a lithium secondary battery were fabricated and the evaluations were conducted in the same manner as in Example 6, except that in the fabrication of an LCO-MgO mixed green sheet (intermediate layer green sheet), the green sheet was made to have a thickness of 70 µm after firing.

### [Example 9]

A separator-integrated positive electrode, a negative electrode, and a lithium secondary battery were fabricated and the evaluations were conducted in the same manner as in Example 1, except that an LCO-MgO mixed green sheet 1 (intermediate layer green sheet 1) was fabricated by setting the volume-based D50 of the particles of the LCO powder to be mixed with the MgO powder to 0.5 µm, setting the amount of the binder to 8 parts by weight, and making the green sheet have a thickness of 5 µm after firing, an LCO-MgO mixed green sheet 2 (intermediate layer green sheet 2) was fabricated by setting the volume-based D50 of the particles of the LCO powder to be mixed to 7 µm, setting the amount of the binder to 20 parts by weight, and making the green sheet have a thickness of 10 µm after firing, and the positive electrode green sheet, the intermediate layer green sheet 1, the intermediate layer green sheet 2, and the separator green sheet were stacked in order.

### [Example 10]

A separator-integrated positive electrode, a negative electrode, and a lithium secondary battery were fabricated and the evaluations were conducted in the same manner as in Example 1, except that an LCO-MgO mixed green sheet 1 (intermediate layer green sheet 1) was fabricated by setting the volume-based D50 of the particles of the LCO powder to be mixed with the MgO powder to 0.5 µm, setting the amount of the binder to 8 parts by weight, and making the green sheet have a thickness of 5 µm after firing, LCO-MgO mixed green sheets 2 (intermediate layer green sheets 2) were fabricated by setting the volume-based D50 of the particles of the LCO powder to be mixed to 7 µm, setting the amount of the binder to 20 parts by weight, and making the green sheet have a thickness of 5 µm after firing, and the positive electrode green sheet, the intermediate layer green sheet 2, the intermediate layer green sheet 1, the intermediate layer green sheet 2, and the separator green sheet were stacked in order.

### [Comparative Example 1]

A separator-integrated positive electrode, a negative electrode, and a lithium secondary battery were fabricated in the same manner as in Example 4, except that the pressure-bonded laminate was debindered at 600°C for five hours, and then subjected to firing in which the temperature was increased to 800°C at 1000°C/h and held for 10 minutes. Further, the SEM image was analyzed with EDX to confirm that there is no intermediate body composed of a mixed oxide layer containing Co and Mg. An evaluation of cycle characteristics was then performed.

Evaluation Results of the lithium secondary batteries of Examples 1 to 10 and Comparative Example 1 are shown in Table 1.

### [Table 1]

**[Table 1]**

| | **Number of Intermediate Layers** | **Thickness of Intermediate Layer (µm)** | **Porosity (%)** | **Average Particle Size (µm)** | **Change of Mg Ratio*** | **Capacity Retention Rate After1000 Cycles (%)** |
|---|---|---|---|---|---|---|
| **Example 1** | **1** | **15** | **31%** | **7.1** | **uniform** | **93% (○)** |
| **Example 2** | **1** | **15** | **17%** | **0.8** | **uniform** | **89% (○)** |
| **Example 3** | **1** | **15** | **13%** | **4.5** | **uniform** | **90% (○)** |
| **Example 4** | **1** | **15** | **28%** | **7** | **monotonic decrease** | **94% (○)** |
| **Example 5** | **1** | **1** | **12%** | **0.6** | **uniform** | **85% (○)** |
| **Example 6** | **1** | **50** | **52%** | **10.8** | **uniform** | **84% (○)** |
| **Example 7** | **1** | **0.5** | **14%** | **0.4** | **uniform** | **79% (Δ)** |
| **Example 8** | **1** | **70** | **53%** | **11.2** | **uniform** | **80% (Δ)** |
| **Example 9** | **2** | **15** | **9% / 32%** | **0.4 / 7.3** | **uniform** | **95% (○)** |
| **Example 10** | **3** | **15** | **9% / 29% / 7%** | **0.4 / 7.1 / 0.5** | **uniform** | **94% (○)** |
| **Comparative Example 1** | **0** | **0** | **-** | **-** | **-** | **71% (×)** |

| | | | | | | |
|---|---|---|---|---|---|---|
| *Change of Mg content ratio from separator side toward positive electrode side | | | | | | |

As shown in Table 1, in Examples 1 to 10 having the intermediate layer between the positive electrode and the separator, the capacity retention rate after 1000 cycles was 79% to 95%. In other words, it was possible to obtain lithium secondary batteries excellent in durability that can maintain the discharge capacity even in the case where charging and discharging are repeated a large number of times. On the other hand, in Comparative Example 1 with no intermediate layer, the capacity retention rate after 1000 cycles was 71%, far below the results in Examples. In addition, in the lithium secondary batteries including the intermediate layer with the thickness of 1 µm or more and 50 µm or less (Examples 1 to 5, 9, 10), the capacity retention rate after 1000 cycles was 84% to 95%, meaning better cycle characteristics.

Among Examples 1 to 10, Examples 1 and 2, with the porosity in the intermediate layer of 15% or more and 50% or less, made it readily possible to fill the pores with the electrolyte without gaps, thereby providing the effect that faster charging and discharging are possible without the intermediate layer significantly inhibiting the transfer of Li between the positive and negative electrodes during charging and discharging.

Further, among Examples 1 to 10, Examples 1, 3, 4, 9, and 10, in which the average particle size constituting the intermediate layer is 1 µm or more and 10 µm or less, had the capacity retention rate after 1000 cycles of 90% or more, exhibiting particularly superior cycle characteristics.

Still further, Example 4, in which the ratio of the elemental amount of Mg present in the intermediate layer decreases from the side in contact with the separator toward the side in contact with the positive electrode, had the capacity retention rate after 1000 cycles of 94%, exhibiting particularly superior cycle characteristics.

Furthermore, Example 9, with two intermediate layers with different porosities formed therein, and Example 10, similarly with three intermediate layers, had the capacity retention rates after 1000 cycles of 95% and 94%, respectively, exhibiting particularly superior cycle characteristics.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### Reference Signs List

10: lithium secondary battery; 12: positive electrode layer; 13: positive electrode-side carbon layer; 14: positive electrode current collector; 15: intermediate layer; 16: negative electrode layer; 17: negative electrode-side carbon layer; 18: negative electrode current collector; 20: separator; 22: electrolytic solution; 24: exterior body; 24a: positive electrode can; 24b: negative electrode can; and 24c: gasket.

## Claims

1. A lithium secondary battery comprising:
a positive electrode composed of a sintered body containing lithium cobaltate;
a negative electrode; and
a separator interposed between the positive electrode and the negative electrode, the separator being composed of a sintered body containing magnesia;
the battery further comprising:
an intermediate layer between the positive electrode and the separator, the intermediate layer containing an oxide containing Co and Mg.

2. The lithium secondary battery according to claim 1, wherein
the separator is a plate-shaped separator including a first main surface and a second main surface located on an opposite side from the first main surface in a thickness direction, and
the positive electrode, the intermediate layer, and the separator constitute an integrated sintered plate.

3. The lithium secondary battery according to claim 1 or 2, wherein the intermediate layer has a thickness of not less than 1 µm and not more than 50 µm.

4. The lithium secondary battery according to any one of claims 1 to 3, wherein the intermediate layer has a porosity of not less than 15% and not more than 50%.

5. The lithium secondary battery according to any one of claims 1 to 4, wherein the oxide constituting the intermediate layer has an average particle size of not less than 1 µm and not more than 10 µm, the average particle size being an average value of lengths through which the oxide is present continuously.

6. The lithium secondary battery according to any one of claims 1 to 5, wherein a ratio Mg/Co of elemental amounts of Mg and Co present in the intermediate layer decreases from a side in contact with the separator to a side in contact with the positive electrode.

7. The lithium secondary battery according to any one of claims 1 to 6, wherein the intermediate layer has a first portion and a second portion, and the first portion has a porosity different from a porosity of the second portion.
